(19) Europäisches Patentamt
European Patent Office
Office européen des brevets

(11) **EP 4 768 983 A1**

(12) **DEMANDE DE BREVET EUROPEEN**

(43) Date de publication:
**01.07.2026 Bulletin 2026/27**

(21) Numéro de dépôt: **25226546.7**

(22) Date de dépôt: **22.12.2025**

(51) Classification Internationale des Brevets (IPC):
*G01S 7/292* (2006.01)   *G01S 7/36* (2006.01)
*G01S 13/20* (2006.01)   *G01S 13/22* (2006.01)
*G01S 13/24* (2006.01)   *G01S 13/30* (2006.01)
*G01S 7/288* (2006.01)   *G01S 13/58* (2006.01)
*G01S 13/02* (2006.01)

(52) Classification Coopérative des Brevets (CPC):
**G01S 7/36; G01S 7/288; G01S 7/2923;
G01S 13/20; G01S 13/227; G01S 13/24;
G01S 13/30; G01S 13/582;** G01S 2013/0245

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**
Etats d'extension désignés:
**BA**
Etats de validation désignés:
**GE KH LA MA MD TN**

(30) Priorité: **24.12.2024 FR 2415253**

(71) Demandeur: **THALES**
**92190 Meudon (FR)**

(72) Inventeurs:
• **GOY, Philippe**
**33700 MERIGNAC (FR)**
• **MAZEAU, Thierry**
**33701 MERIGNAC (FR)**
• **COTTRON, Rodolphe**
**33700 MERIGNAC (FR)**

(74) Mandataire: **Lavoix**
**2, place d'Estienne d'Orves
75441 Paris Cedex 09 (FR)**

(54) **PROCÉDÉ D OBSERVATION D'UN ENVIRONNEMENT AVEC UN MODE DE LEVÉE D AMBIGUÏTÉ ET UN MODE D'ÉCOUTE ET DISPOSITIFS ASSOCIÉS**

(57) La présente invention concerne un procédé d'observation d'un environnement (12) comprenant la mise en œuvre de plusieurs récurrences d'une étape d'émission et de réception de signaux, au moins une séquence de récurrences comprenant, pour N et M deux entiers, comprenant :
- N premières récurrences comprenant l'émission d'impulsions dans une première direction à une première fréquence et la réception des échos émis suite à cette émission,
- M récurrences comprenant l'émission d'impulsions dans une deuxième direction à une deuxième fréquence, et
- N deuxièmes récurrences comprenant l'émission d'impulsions à une période de répétition dans la deuxième direction à la deuxième fréquence, et la réception des échos émis suite à cette émission.

FIG.1

EP 4 768 983 A1

**Description**

La présente invention concerne un procédé d'observation d'un environnement par un radar. Elle se rapporte aussi à des dispositifs adaptés pour la mise en œuvre d'un tel procédé, à savoir un radar, un système d'observation et un aéronef.

Les modes à lever d'ambiguïté distance, notamment Doppler, implique l'émission et la réception d'un nombre de récurrences composé d'un « temps mort » et d'un « temps utile » d'analyse.

Le temps mort correspond au temps de propagation des échos correspondant à la distance maximale instrumentée souhaitée pour l'application, de sorte que tous les échos reçus puissent être traités de manière cohérente sur toutes les récurrences d'analyse.

Il existe donc un besoin pour un procédé permettant d'exploiter ou de supprimer lesdites récurrences de temps mort sans dégrader les performances de détection.

A cet effet, la description a pour objet un procédé d'observation d'un environnement, le procédé étant mis en œuvre par un système d'observation comportant un radar et comprenant la mise en œuvre de plusieurs récurrences d'une étape d'émission et de réception de signaux, le procédé comprenant au moins une séquence de récurrences comprenant, pour N et M deux entiers :

- N premières récurrences comprenant une étape de :

    - émission d'impulsions à une période de répétition dans une première direction à une première fréquence, et
    - réception des échos émis à la première fréquence dans la première direction,

- M récurrences suivant les N premières récurrences et comprenant une étape de :

    - émission d'impulsions à la période de répétition dans une deuxième direction à une deuxième fréquence, la deuxième direction étant différente de la première direction et la deuxième fréquence étant différente de la première fréquence, et
    - écoute des échos émis à la première fréquence dans la première direction, et

- N deuxièmes récurrences suivant les M récurrences et comprenant une étape de :

    - émission d'impulsions à la période de répétition dans la deuxième direction à la deuxième fréquence, et
    - réception des échos émis à la deuxième fréquence dans la deuxième direction.

Suivant d'autres aspects avantageux de l'invention, le procédé de surveillance comprend une ou plusieurs des caractéristiques suivantes, prises isolément ou suivant toutes les combinaisons techniquement possibles :

- le procédé comprend la mise en œuvre de P séquences, chaque séquence étant mise en œuvre à une période de répétition respective.
- chaque séquence comporte une série additionnelle de :

    - M récurrences additionnelles suivant N récurrences et comprenant une étape de :

        - émission d'impulsions à la période de répétition dans une direction additionnelle à une fréquence additionnelle, la direction additionnelle étant différente des directions des récurrences précédentes et la fréquence additionnelle étant différente des fréquences des récurrences précédentes, et
        - écoute des échos émis à la fréquence et la direction des échos reçus lors de l'étape de réception des N récurrences que les M récurrences additionnelle suivent, et

    - N récurrences additionnelles suivant les M récurrences additionnelles et comprenant une étape de :

        - émission d'impulsions à la période de répétition dans la direction additionnelle à la fréquence additionnelle, et
        - réception des échos émis à la fréquence additionnelle dans la direction additionnelle,

la séquence comportant série(s) additionnelle(s) pour K directions observées par le radar, K étant un entier supérieur ou égal à 3.

- lors de chaque étape d'émission, au moins une impulsion émise comporte une phase aléatoire respective introduite par le radar et chaque étape de réception d'un écho reçu de l'au moins une impulsion émise avec une phase aléatoire comprend la compensation du déphasage lié à la phase aléatoire introduite.
- le procédé comporte une étape de traitement des échos reçus pour déterminer au moins l'une parmi une distance d'une cible et une vitesse d'une cible dans l'environnement.
- le procédé comporte une étape d'analyse des échos écoutés lors d'une écoute pour obtenir un comportement électromagnétique dans la direction et la fréquence des échos écoutés.
- l'étape de traitement prend en compte le comportement électromagnétique obtenu à l'étape d'analyse.

La description a également pour objet un radar propre à réaliser la mise en œuvre de plusieurs récurrences d'une étape d'émission et de réception de signaux, au moins une séquence de récurrences comprenant, pour N et M deux entiers :

- N premières récurrences durant lesquelles le radar est propre à :

   - émettre des impulsions à une période de répétition dans une première direction à une première fréquence, et
   - recevoir des échos émis à la première fréquence dans la première direction,

- M récurrences suivant les N premières récurrences et durant lesquelles le radar est propre à :

   - émettre des impulsions à la période de répétition dans une deuxième direction à une deuxième fréquence, la deuxième direction étant différente de la première direction et la deuxième fréquence étant différente de la première fréquence, et
   - écouter des échos émis à la première fréquence dans la première direction, et

- N deuxièmes récurrences suivant les M récurrences et durant lesquelles le radar est propre à :

   - émettre des impulsions à une période de répétition dans la deuxième direction à la deuxième fréquence, et
   - recevoir des échos émis à la deuxième fréquence dans la deuxième direction.

La description concerne aussi un système d'observation comportant un radar tel que précédemment décrit.

La description a également pour objet un aéronef comprenant un radar tel que précédemment décrit ou un système d'observation tel que précédemment décrit.

Dans la présente description, l'expression « propre à » signifie indifféremment « adapté pour », « adapté à » ou « configuré pour ».

L'invention apparaîtra plus clairement à la lecture de la description qui va suivre, donnée uniquement à titre d'exemple non limitatif, et faite en référence aux dessins dans lesquels :

- la figure 1 est une représentation schématique d'un aéronef présentant un système d'observation d'un environnement,
- la figure 2 est une illustration schématique d'un exemple de mise en œuvre d'un procédé d'observation par le système d'observation, et
- la figure 3 est une représentation d'un ordinogramme de traitement des signaux radar visibles sur la figure 2.

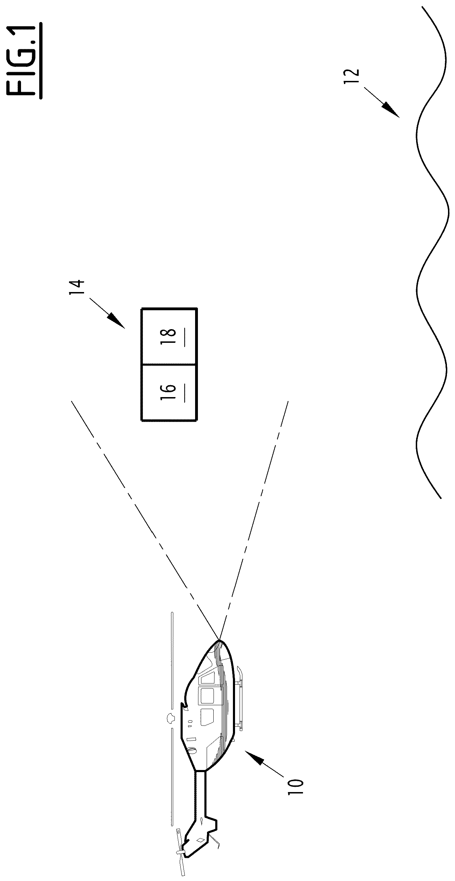

Un aéronef 10 est représenté schématiquement sur la figure 1.

L'aéronef 10 sert ici à observer l'environnement 12.

L'aéronef 10 cherche, en particulier, à détecter la présence de cibles potentielles.

L'aéronef 10 est muni d'un système d'observation 14, le système d'observation 14 comportant un radar 16 en interaction avec un calculateur 18.

Le radar 16 permet, par exemple, de détecter la position et/ou la vitesse des cibles par une observation de l'environnement en mode Doppler.

Plus généralement, le radar est propre à mettre en œuvre tout mode de détection à levée d'ambiguïté.

Pour cela, comme expliqué ultérieurement, le radar 16 met en œuvre plusieurs récurrences d'une étape d'émission et de réception de signaux.

Par récurrence, il est entendu ici un intervalle de temps comprenant une partie dédiée à l'émission et une partie dédiée à la réception. Cela n'impose pas que le radar 16 émet effectivement des impulsions radars ou reçoit effectivement des échos.

Le calculateur 18 est, par exemple, réalisé sous la forme d'un circuit programmable de type FPGA (de l'anglais « Field Programmable Gate Array ») et/ou de type ASIC (de l'anglais « Application-Specific Integrated Circuit »). En complément ou en variante, le calculateur 18 est réalisé au moins partiellement sous la forme d'un logiciel exécutable par un processeur et mémorisé dans une mémoire.

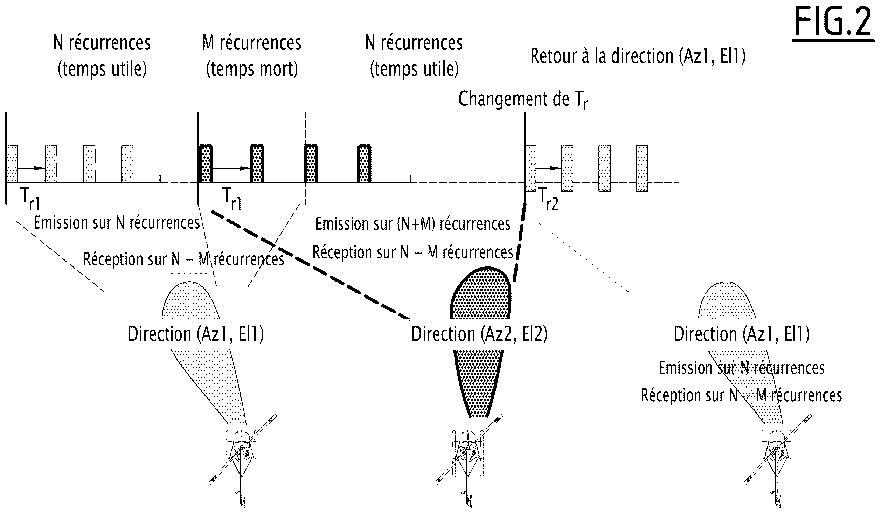

Le fonctionnement spécifique du radar 16 est maintenant illustré en référence à la figure 2 qui montre un exemple de mise en œuvre d'un procédé d'observation de l'environnement 12 que le système d'observation 14 est propre à mettre en œuvre.

Ce cas correspond à un exemple simple de mise en œuvre permettant de bien comprendre le principe de fonctionnement du radar 16, la génération de ce procédé à un cas quelconque étant détaillé ensuite.

Comme visible sur cette figure 2, une séquence de récurrences d'un radar 16 est représenté schématiquement.

Cette séquence comprend successivement N premières récurrences, M récurrences et N deuxième récurrences.

N et M sont des entiers, généralement supérieurs ou égaux à 2, typiquement supérieur ou égal à 4.

Les N premières récurrences comprennent une étape d'émission d'impulsions à une période de répétition $T_{R1}$ dans une première direction D1 à une première fréquence Fe1.

La première direction D1 correspond à une première direction repérée en azimut et en élévation par le couple (Az1, El1).

Les N premières récurrences comportent aussi la réception des échos de l'environnement 12 émis à la première fréquence Fe1 dans la première direction D1 en réponse aux impulsions émises.

Du point de vue du mode Doppler, la réception réalisée lors des N premières récurrences correspond à un temps utile.

Les M récurrences qui suivent les N premières récurrences comportent une étape d'émission d'impulsions à la période de répétition $T_{R1}$ dans une deuxième direction D2 à une deuxième fréquence Fe2.

La deuxième direction D2 étant différente de la première direction D1.

La deuxième direction D2 correspond à une deuxième direction repérée en azimut et en élévation par le couple (Az2, El2).

Dans le cas d'un balayage de directions voisines, l'une des coordonnées Az2 ou El2 de la deuxième direction D2 est identique à l'une des coordonnées Az1 ou El1 de la première direction D1 mais il est tout à fait possible d'appliquer la séquence sur deux directions D1 et D2 non contiguës.

La deuxième fréquence Fe2 est également différente de la première fréquence Fe1.

Les M récurrences ne reçoivent pas d'échos des impulsions émises dans la deuxième direction D2 du fait du temps de propagation nécessaire pour que les impulsions parviennent à la cible et reviennent vers le radar 16.

En ce sens, pour le mode Doppler à lever d'ambiguïté distance, les M récurrences correspondent à un temps mort pour la réception.

Les M récurrences de « temps mort » correspondent au temps d'aller/retour des échos à la distance maximale instrumentée.

Le nombre M de telles récurrences peut être obtenu par application de la formule suivante :

$$M = ceil\left\{\frac{2D_{max}}{cT_R}\right\}$$

Où :

- ceil désigne l'entier supérieur,
- $D_{max}$ est la distance maximale instrumentée,
- $c$ désigne la célérité de la lumière, et
- $T_R$ désigne la période de répétition.

A titre d'ordre de grandeur, pour une distance maximale instrumentée de $D_{max}$ = 150 *km,* une période de répétition $T_R$ correspondant à une fréquence de répétition moyenne de 10 kHz, cela conduit à une valeur de M = 10.

Dans cet exemple, cela conduit à un intervalle de temps de 1 ms.

Un tel temps mort correspond ainsi à un temps d'éclipse ou un temp de latence.

Ce temps mort est parfois caractérisé par le terme anglais de « *fill pulses* » qui correspond au nombre d'impulsions à émettre supplémentaire pour effectuer un traitement cohérent identique entre chaque rang d'ambiguïté distance.

Selon l'invention, les M récurrences sont mises à profit pour mettre en œuvre une écoute des échos émis à la première fréquence Fe1 dans la première direction D1.

**Il** est ainsi profité d'un temps mort pour le mode Doppler pour obtenir une information complémentaire sur l'environnement 12.

Les N deuxièmes récurrences comportent l'émission d'impulsions à la période de répétition $T_{R1}$ dans la deuxième direction D2 à la deuxième fréquence Fe2.

Les N deuxièmes récurrences comprennent aussi la réception des échos de l'environnement 12 émis à la deuxième fréquence Fe2 dans la deuxième direction D2 en réponse aux impulsions émises.

Par comparaison aux M récurrences où aucune impulsion émise n'est revenue sous forme d'un écho, les N deuxièmes récurrences peuvent être vues comme N récurrences d'analyse.

La distinction entre les différents échos se fait à l'aide d'un code de phase.

La distinction des échos relatifs aux différents rangs d'ambiguïté distance sur la première direction D1 se fait à l'aide d'un code de phase. Le code de phase permet d'obtenir autant de cartes de puissance associées à un rang d'ambiguïté distance, isolé des autres.

La deuxième direction D2 est traitée nominalement par le calculateur 18 avec une carte de puissance et une détection sur tous les rangs d'ambiguïté repliés sur la même carte si on ne fait pas de code de phase (premier cas) ou de manière identique (deuxième cas).

Plus précisément, lors de chaque étape d'émission, une impulsion émise comporte une phase aléatoire respective introduite par le radar et, lors de chaque étape de réception, un écho reçu de l'au moins une impulsion émise avec une phase aléatoire comprend la compensation du déphasage liée à la phase aléatoire introduite.

Cette impulsion est l'impulsion pour laquelle le tuilage est mis en œuvre, ici la première impulsion.

Sur la séquence qui vient d'être illustrée, il est réalisé un tuilage entre les émissions / réception pour s'affranchir d'une partie du temps mort du mode Doppler (celui qui a lieu au niveau des M récurrences).

Cela permet de gagner un temps d'écoute sur un temps mort du mode Doppler.

Pour réaliser un mode Doppler, la séquence est répétée plusieurs fois à une période de répétition respective comme l'illustre schématiquement la partie droite de la figure 2 avec un changement de valeur de la période de répétition à la fin de la séquence (passage d'une première période de répétition $T_{R1}$ à une deuxième période de répétition $T_{R2}$).

Plus précisément, P séquences sont mises en œuvre.

Le nombre P est choisi pour permettre de lever les ambiguïtés.

Un lever d'ambiguïté est un extracteur de détections qui fait un test « K/N » pour confirmer une détection sur N cartes de détection obtenues sur N valeurs de périodes de répétition Tr.

Typiquement, on trouve de K/N à lever d'ambiguïté des valeurs telles que 2/2, 2/3 ou 2/4, 3/5, 3/8 ou encore 5/8.

Dans l'exemple simple décrit, P est supposé égal à 2.

Autrement formulé, on va répéter la séquence précédente entre les deux directions D1 et D2 jusqu'à ce que le barillet de périodes de répétition soit vidé pour procéder au lever d'ambiguïté (distance, vitesse) par recombinaison des périodes de répétition.

Lorsque chaque écho d'un ensemble de P séquences est obtenu, il est possible de mettre en œuvre un traitement des échos reçus pour déterminer au moins l'une parmi une distance d'une cible et une vitesse d'une cible dans l'environnement 12 conformément au mode Doppler souhaité.

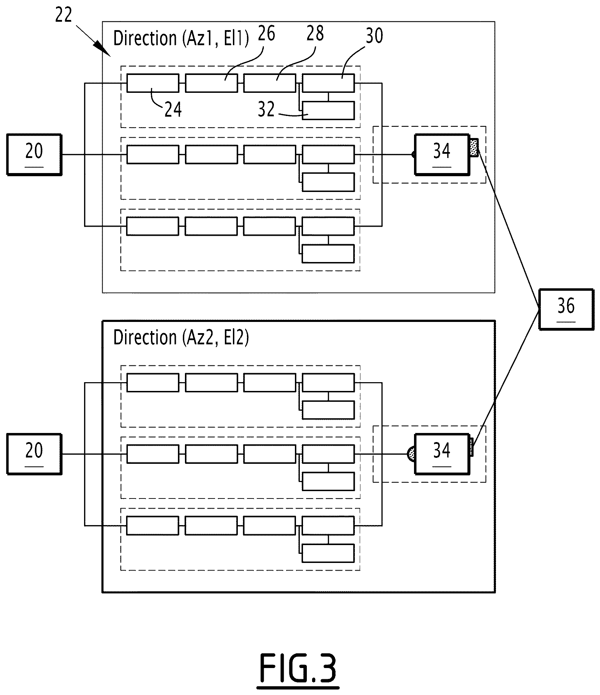

Ce traitement par le calculateur 18 est un traitement parallèle pour chaque rang d'ambiguïté comme illustré schématiquement par la figure 3.

Le traitement comporte d'abord une opération comportant une compensation de la phase et une duplication des signaux (rectangle 20 sur la figure 3) pour obtenir autant de signaux que de rang d'ambiguïté (soit M+1 et donc 3 pour M=2).

Cette opération est réalisée pour chaque direction, de sorte que deux rectangles 20 sont visible sur la figure 3.

Il peut être noté que pour la première direction D1, un décalage de récurrences à traiter existe (les récurrences parmi M sont progressivement intégrées) alors que, pour la deuxième direction D2, il est soit utilisé le code de phase en procédant similairement à la première direction D1 soit utilisé une seule carte de détection en laissant la résolution des ambiguïtés à l'extracteur.

Chaque rang d'ambiguïté fait également l'objet d'un traitement mis en œuvre par une voie 22, de sorte qu'il y a ici 3*2=6 voies 22.

Le même traitement est appliqué sur chaque voie 22 et comprend des opérations usuelles comme une opération de compression d'impulsions (rectangle 24), une opération de rejection de fouillis (rectangle 26), une opération de traitement Doppler (rectangle 28), une opération de détection TFAC (rectangle 30) et une opération de mesure du bruit ambiant (rectangle 32).

En sortie de chaque voie 22, un unique bloc d'extraction 34 permet de réaliser une combinaison des différents rangs d'ambiguïtés pour obtenir la vitesse et/ou la distance de la cible cherchée(s).

En variante, chaque voie 22 comporte un bloc d'extraction 34 réalisant une extraction de la vitesse et/ou de la distance.

Dans chacun des cas, le ou les blocs d'extraction 34 sont reliées à un bloc de pistage.

Dans l'exemple de la figure 3, le bloc de pistage 36 permet de réaliser une synthèse des informations ainsi obtenues dans un objectif de pistage d'une cible, c'est-à-dire que le bloc de pistage 36 fournit des plots pour un système de pistage non représenté.

Le procédé décrit permet de supprimer certains temps morts, ici pour la première direction D1.

D'autres utilisations de l'écoute sont néanmoins possibles.

Un exemple non limitatif est maintenant décrit.

L'opération de mesure du bruit ambiant (rectangle 32) est ici avantageusement réalisée à l'aide de l'étape d'écoute.

Pour cela, le procédé comporte également l'analyse des échos écoutés lors d'une écoute pour obtenir un comportement électromagnétique dans la direction et la fréquence des échos écoutés.

Ainsi, l'écoute réalisée lors des M récurrences permet d'obtenir une carte d'ambiance dans la première direction D1 à la première fréquence Fe1.

Autrement formulé, l'étape de traitement prend en compte le comportement électromagnétique obtenu à l'étape d'analyse.

Cela permet une mise en œuvre plus rapide du procédé dans la mesure où il n'est pas nécessaire de dédier un temps spécifique à l'écoute en plus des récurrences utilisés pour la mise en œuvre du mode Doppler.

Il pourrait aussi être envisagé d'écouter dans la deuxième direction D2 lors des M récurrences.

Cela pourrait permettre de réagir si le couple direction-fréquence correspond à une fréquence polluée, notamment en changeant de couple grâce à l'écoute réalisée.

Le procédé décrit est également compatible avec l'observation de plus de deux directions.

Il s'agit donc ici d'observer K directions avec K un entier supérieur ou égal à 3.

Pour chacune des directions additionnelles observées (en plus des deux directions précédentes), chaque séquence comporte une série additionnelle de récurrences comprenant M récurrences additionnelles suivant N récurrences et N récurrences additionnelles suivant les M récurrences additionnelles.

Les M récurrences additionnelles comprennent une étape d'émission d'impulsions à la période de répétition dans une direction additionnelle à une fréquence additionnelle, la direction additionnelle étant différente des directions des récurrences précédentes et la fréquence additionnelle étant différente des fréquences des récurrences précédentes.

Pour K=3, cela veut dire que les M récurrences additionnelles comprennent une étape d'émission d'impulsions à la période de répétition courante dans une troisième direction D3 à une troisième fréquence Fe3, que la troisième direction D3 est différente des première et deuxième directions D1 et D2 et que la troisième fréquence Fe3 est différentes des première et deuxième fréquences Fe1 et Fe2.

Les M récurrences additionnelles comportent également une étape d'écoute des échos émis à la fréquence et la direction des échos reçus lors de l'étape de réception des N récurrences que les M récurrences additionnelle suivent.

Pour l'exemple décrit, cela veut dire que les M récurrences additionnelles comprennent l'écoute des échos à la deuxième fréquence Fe2 et dans la deuxième direction D2.

Les N récurrences additionnelles comprennent une étape d'émission d'impulsions à la période de répétition dans la direction additionnelle à la fréquence additionnelle.

Pour l'exemple à K=3, cela signifie que le radar 16 émet des impulsions à la période de répétition courante dans la troisième direction D3 à la troisième fréquence Fe3.

Les N récurrences additionnelles comportent aussi une étape de réception des échos émis à la fréquence additionnelle dans la direction additionnelle.

Toujours pour l'exemple décrit, cela correspond à la réception par le radar des échos émis par l'environnement 12 dans la troisième direction D3 à la troisième fréquence Fe3.

Pour cette séquence, il est ainsi gagné 2 temps d'écoute correspondant à 2 temps morts du mode Doppler.

Plus généralement, il est gagné un temps d'écoute pour chaque série additionnelle, de sorte que pour K directions observées, il est gagné (K-1) temps d'écoute correspondant à (K-1) temps morts du mode Doppler. En effet, il existe une phase de temps mort qui ne peut être gagnée à chaque changement de période de répétition.

En théorie, un code de phase différent et discernable doit être employé pour chaque direction. Toutefois, en pratique, deux codes différents suffisent dans la mesure où les échos de la troisième direction D3 ne seront pas captés pendant la réception sur la première direction D1.

La mise en œuvre du procédé pour K directions implique également l'ajout de voies 22 additionnelles. Dans le cas général, le traitement implique l'utilisation de K*M voies différentes (si on choisit de traiter la dernière direction comme les autres avec des codes de phase).

Ceci n'est néanmoins pas gênant dans la mesure où il s'agit de voies identiques.

Il peut aussi être indiqué ici que le procédé est applicable aux architectures radar fixes ou à balayage mécanique dotées d'antennes actives un plan ou deux plans, tant que la formation de faisceaux conventionnelle possède suffisamment de voies disponibles à numériser pour l'application.

Les radars à antenne active sont souvent désignés par l'abréviation AESA qui renvoie à la dénomination anglaise correspondante de *« Active Electronically Scanned Array »* (qui signifie littéralement réseau à balayage électronique actif).

**Revendications**

1. Procédé d'observation d'un environnement (12), le procédé étant mis en œuvre par un système d'observation (14) comportant un radar (16) et comprenant la mise en œuvre de plusieurs récurrences d'une étape d'émission et de réception de signaux, le procédé comprenant au moins une séquence de récurrences comprenant, pour N et M deux entiers :

   - N premières récurrences comprenant une étape de :

      - émission d'impulsions à une période de répétition dans une première direction à une première fréquence, et
      - réception des échos émis à la première fréquence dans la première direction,

   - M récurrences suivant les N premières récurrences et comprenant une étape de :

      - émission d'impulsions à la période de répétition dans une deuxième direction à une deuxième fréquence, la deuxième direction étant différente de la première direction et la deuxième fréquence étant différente de la première fréquence, et
      - écoute des échos émis à la première fréquence dans la première direction, et

   - N deuxièmes récurrences suivant les M récurrences et comprenant une étape de :

      - émission d'impulsions à la période de répétition dans la deuxième direction à la deuxième fréquence, et
      - réception des échos émis à la deuxième fréquence dans la deuxième direction.

2. Procédé selon la revendication 1, dans lequel, le procédé comprend la mise en œuvre de P séquences, chaque séquence étant mise en œuvre à une période de répétition respective.

3. Procédé selon la revendication 1 ou 2, dans lequel, chaque séquence comporte une série additionnelle de :

   - M récurrences additionnelles suivant N récurrences et comprenant une étape de :

      - émission d'impulsions à la période de répétition dans une direction additionnelle à une fréquence additionnelle, la direction additionnelle étant différente des directions des récurrences précédentes et la fréquence additionnelle étant différente des fréquences des récurrences précédentes, et

- écoute des échos émis à la fréquence et la direction des échos reçus lors de l'étape de réception des N récurrences que les M récurrences additionnelle suivent, et

- N récurrences additionnelles suivant les M récurrences additionnelles et comprenant une étape de :

- émission d'impulsions à la période de répétition dans la direction additionnelle à la fréquence additionnelle, et
- réception des échos émis à la fréquence additionnelle dans la direction additionnelle,

la séquence comportant (K-2) série(s) additionnelle(s) pour K directions observées par le radar (16), K étant un entier supérieur ou égal à 3.

4. Procédé selon l'une quelconque des revendications 1 à 3, dans lequel, lors de chaque étape d'émission, au moins une impulsion émise comporte une phase aléatoire respective introduite par le radar (16) et, dans lequel, chaque étape de réception d'un écho reçu de l'au moins une impulsion émise avec une phase aléatoire comprend la compensation du déphasage lié à la phase aléatoire introduite.

5. Procédé selon l'une quelconque des revendications 1 à 4, dans lequel le procédé comporte une étape de traitement des échos reçus pour déterminer au moins l'une parmi une distance d'une cible et une vitesse d'une cible dans l'environnement (12).

6. Procédé selon l'une quelconque des revendications 1 à 5, dans lequel le procédé comporte une étape d'analyse des échos écoutés lors d'une écoute pour obtenir un comportement électromagnétique dans la direction et la fréquence des échos écoutés.

7. Procédé selon les revendications 5 et 6, dans lequel l'étape de traitement prend en compte le comportement électromagnétique obtenu à l'étape d'analyse.

8. Radar (16) propre à réaliser la mise en œuvre de plusieurs récurrences d'une étape d'émission et de réception de signaux, au moins une séquence de récurrences comprenant, pour N et M deux entiers :

- N premières récurrences durant lesquelles le radar (16) est propre à :

- émettre des impulsions à une période de répétition dans une première direction à une première fréquence, et

- recevoir des échos émis à la première fréquence dans la première direction,

- M récurrences suivant les N premières récurrences et durant lesquelles le radar (16) est propre à :

- émettre des impulsions à la période de répétition dans une deuxième direction à une deuxième fréquence, la deuxième direction étant différente de la première direction et la deuxième fréquence étant différente de la première fréquence, et
- écouter des échos émis à la première fréquence dans la première direction, et

- N deuxièmes récurrences suivant les M récurrences et durant lesquelles le radar (16) est propre à :

- émettre des impulsions à une période de répétition dans la deuxième direction à la deuxième fréquence, et
- recevoir des échos émis à la deuxième fréquence dans la deuxième direction.

9. Système d'observation (14) comportant un radar (16) selon la revendication 8.

10. Aéronef (10) comprenant un radar (16) selon la revendication 8 ou un système d'observation (14) selon la revendication 9.

FIG.1

EP 4 768 983 A1

FIG.2

N récurrences
(temps utile)

M récurrences
(temps mort)

N récurrences
(temps utile)

Retour à la direction (Az1, El1)

Changement de $T_r$

$T_{r1}$

$T_{r1}$

$T_{r2}$

Emission sur N récurrences

Réception sur N + M récurrences

Emission sur (N+M) récurrences

Réception sur N + M récurrences

Direction (Az1, El1)

Direction (Az2, El2)

Direction (Az1, El1)

Emission sur N récurrences

Réception sur N + M récurrences

EP 4 768 983 A1

## FIG.3

RAPPORT DE RECHERCHE EUROPEENNE

Numéro de la demande

EP 25 22 6546

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | FR 3 143 767 A1 (THALES SA [FR]) 21 juin 2024 (2024-06-21) * abrégé; revendications 1,2; figures 2,3 * * alinéas [0002], [0011], [0018], [0043] - [0048], [0059] * | 1-10 | INV. G01S7/292 G01S7/36 G01S13/20 G01S13/22 G01S13/24 G01S13/30 |
| A | US 2016/054439 A1 (BROOKNER ELI [US] ET AL) 25 février 2016 (2016-02-25) * abrégé; revendications 1,2; figures 4,5 * * alinéas [0004], [0017], [0020], [0054] * | 1-10 | G01S7/288 G01S13/58 ADD. G01S13/02 |
| A | LI WUJUN ET AL: "An Efficient Track-Before-Detect for Multi-PRF Radars With Range and Doppler Ambiguities", IEEE TRANSACTIONS ON AEROSPACE AND ELECTRONIC SYSTEMS, IEEE SERVICE CENTER, PISCATAWAY, NJ, US, vol. 58, no. 5, 10 mars 2022 (2022-03-10), pages 4083-4100, XP011922609, ISSN: 0018-9251, DOI: 10.1109/TAES.2022.3158633 [extrait le 2022-10-11] * abrégé; figure 1 * | 1-10 | |

DOMAINES TECHNIQUES RECHERCHES (IPC)

G01S

Le présent rapport a été établi pour toutes les revendications

| Lieu de la recherche | Date d'achèvement de la recherche | Examinateur |
|---|---|---|
| Munich | 14 avril 2026 | Mercier, Francois |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P4C02)

**EP 4 768 983 A1**

## ANNEXE AU RAPPORT DE RECHERCHE EUROPEENNE
## RELATIF A LA DEMANDE DE BREVET EUROPEEN NO.

EP 25 22 6546

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

14-04-2026

| Document brevet cité au rapport de recherche | Date de publication | Membre(s) de la famille de brevet(s) | Date de publication |
|---|---|---|---|
| FR 3143767 A1 | 21-06-2024 | EP 4386442 A1<br>FR 3143767 A1<br>US 2024201322 A1 | 19-06-2024<br>21-06-2024<br>20-06-2024 |
| US 2016054439 A1 | 25-02-2016 | AUCUN | |